# EUROPÄISCHE PATENTANMELDUNG

(11) **EP 2 284 965 A1**
(43) Veröffentlichungstag der Anmeldung: **16.02.2011**
(21) Anmeldenummer: 09167189.1
(22) Anmeldetag: 04.08.2009
(51) Int. Cl.: H01S 3/08, H01S 3/086, H01S 3/081, H01S 3/11

(54) **Laserresonator mit verkippungs-unempfindlichen Spiegeln**

(71) Anmelder: High Q Technologies GmbH, 6832 Röthis (AT); Kopf, Daniel, Dr., 6832 Röthis (AT)
(72) Erfinder: Kopf, Daniel, A-6832 Röthis (AT)
(74) Vertreter: Harmann, Bernd-Günther

(57) **Zusammenfassung**

In einer Laseranordnung mit mindestens einem Lasermedium (2') zur Erzeugung einer Laseremission, einem Laserresonator mit einem Strahlgang (SG) mit einer Länge von wenigstens 20 cm und mit wenigstens einem Endspiegel (6') ist der Strahlgang (SG) innerhalb des Laserresonators zumindest teilweise als Freistrahloptik ausgebildet. Ein im Strahlgang angeordnetes Resonatorelement (9) weist wenigstens zwei optischen Flächen als mit der über den Strahlgang (SG) geführten Strahlung wechselwirkenden Flächen auf, wobei diese optischen Flächen so miteinander starr verbunden und gemeinsam im Strahlgang (SG) justierbar sind, dass sie bei Verkippung um einen Fehlwinkel im wesentlichen den gleichen Effekt auf die Führung des Strahlgangs (SG) erzielen, jedoch mit umgekehrtem Vorzeichen, so dass eine gegenseitige Kompensation von Verkippungsfehlern erfolgt.

## Beschreibung

Die Erfindung betrifft eine Laseranordnung, insbesondere zur Erzeugung oder Verstärkung von Femto- oder Pikosekundenpulsen, nach dem Oberbegriff von Anspruch 1 und ein Resonatorelement zur Anordnung im Strahlgang eines Laserresonators einer solchen Laseranordnung nach dem Oberbegriff des Anspruchs 15.

Ultrakurzpulslasersysteme, das heißt Laseranordnungen, die in der Lage sind, Laserpulse mit einer charakteristischen Pulsdauer im Femto- oder Pikosekundenbereich zu erzeugen bzw. zu verstärken, sind seit langem in verschiedenen Ausführungsformen aus dem Stand der Technik bekannt, wobei Femtosekunden- und Pikosekundenlaser in einer wachsenden Zahl von verschiedenartigen Anwendungen eingesetzt werden. Solche Lasersysteme verwenden Kavitäten oder Laserresonatoren mit zwei den Strahlgang definierenden Spiegelelementen und einem Lasermedium. Modengekoppelte Femtosekunden- und Pikosekundenlaser nutzen hierbei in der Regel eine sog. verlängerte Kavität mit einer Mehrzahl von Spiegelelementen zur Strahlführung, wobei eine Faltung des Strahlgangs die gewünschte Kompaktheit des Aufbaus gewährleistet. Ein solcher Aufbau ist insbesondere dann relevant, wenn die Pulswiederholfrequenz im MHz-Bereich liegen soll, z.B. bei einer typischen Pulswiederholfrequenz im Bereich von 1-120 MHz. Eine derartige Wiederholfrequenz erfordert zur Einhaltung einer praktikablen Kompaktheit die Nutzung einer solchen verlängerten Kavität mit zwei oder mehr Umlenk- bzw. Faltungsspiegel, welche eine Krümmung aufweisen oder aber auch plan ausgelegt sein können. Typische Resonatoren solcher Laseranordnungen weisen bei einigen Elementen eine Empfindlichkeit von 50 µrad auf, d.h. dass bei (unerwünschter) Verkippung eines Elementes aus dem Optimalzustand heraus um diesen Winkelbetrag eine merkliche Leistungseinbusse von mehreren Prozent resultiert.

Bei der Montage eines Laserresonators ist es üblich, dass dessen Spiegel auf einer gemeinsamen (Basis-)Platte, einem gemeinsamen monolithischen Block oder einem gemeinsamen, mechanisch stabilen (Basis-)Gestänge als Basiskomponente montiert werden. Üblicherweise werden die eigentlichen Spiegel, bestehend aus der eigentlichen reflektierenden Spiegelbeschichtung, die auf einem Substrat zumeist aus Glas aufgebracht wurde, zunächst in - meist metallischen - Spiegelhalterungen gefasst, die dann wiederum auf der Basis bzw. Basiskomponente befestigt werden. Dabei ergibt sich die Problematik, dass zwangsläufig mindestens zwei verschiedene Materialien aufeinander treffen: Glas als Spiegelsubstrat einerseits und Metalle wie Aluminium und Edelstahl andererseits. Die thermische Ausdehnung dieser Materialien ist deutlich verschieden, sodass bei Veränderungen der Temperatur entweder eine Spannung und/oder eine Verschiebung gegeneinander resultieren.

Eine Winkelstabilität von besser als 50 µrad ist deshalb bei der Montage von Materialien mit unterschiedlichem Ausdehnungskoeffizient technisch schwer oder nur mit hohem Aufwand erreichbar, wobei Umwelteinflüssen und den Veränderungen über einen mehrjährigen Zeitablauf hinweg Rechnung getragen werden muss. Eine typische einzuhaltende Bedingung besteht darin, dass eine Spiegelfläche mit einer Ausdehnung von 10 mm am einen Ende (gegenüber dem anderen Ende) maximal um 0,5 µm abweichen darf, was der oben angeführten Kippempfindlichkeit von 50 µrad entspricht. Zieht man in Betracht, dass mehrere Spiegelelemente ihre Toleranzen aufsummieren können, so ist das Stabilitätserfordernis für den einzelnen Spiegel deutlich zu erhöhen. Die Oberflächenrauhigkeit von gefrästen oder gebohrten metallischen Oberflächen liegt üblicherweise bei Ra=0,4...0,8 8 µm und kann die gewünschte Auflagegenauigkeit somit im Regelfall nicht bieten.

Eine Aufgabe der vorliegenden Erfindung besteht in der Bereitstellung einer verbesserten Laseranordnung mit verlängerter Kavität, insbesondere zur Erzeugung von Femto-oder Pikosekundenpulsen.

Eine weitere Aufgabe besteht in der Bereitstellung einer solchen Laseranordnung, welche eine erhöhte Robustheit und Stabilität der Leistungsparameter auch über längere Zeiträume aufweist.

Eine weitere Aufgabe besteht in der Bereitstellung einer Laseranordnung, welche auf die Verbiegung oder Verwindung der Grundplatte oder des Grundgerüstes geringfügig reagiert, und somit auch gegenüber äusseren Einflüssen wie Temperatur, mechanische Spannungen oder Gas- bzw. Luftdruck unempfindlicher ist.

Eine weitere Aufgabe besteht in der Bereitstellung einer Laseranordnung, bei welcher die Kippempfindlichkeit von Resonatorelementen dahingehend kompensiert wird, dass der austretende Nutzstrahl sich nicht oder unwesentlich in der Strahllage verändert.

Diese Aufgaben werden durch die Gegenstände des Anspruchs 1 bzw. 15 oder der abhängigen Ansprüche gelöst bzw. die Lösungen weitergebildet.

Die Erfindung betrifft die Gestaltung und Verwendung von Resonatorelementen im Strahlgang einer Laseranordnung mit verlängerter Kavität bzw. einem verlängerten Laserresonator. Hierbei erfolgt erfindungsgemäss eine Zusammenfassung von wenigstens zwei den Laserresonator definierenden oder sich in dessen Strahlgang befindlichen und diesen beeinflussenden Komponenten zu einem gemeinsamen Resonatorelement, das in seiner Gesamtheit im Strahlgang montiert wird, insbesondere in verstell- bzw. justierbarer Anordnung. Die optischen Flächen dieser Komponenten als Transmissions- und/oder Reflexionsflächen sind dadurch so miteinander starr verbunden und gemeinsam im Strahlgang justierbar, dass sie bei Verkippung - jeweils für sich - um einen Fehlwinkel im wesentlichen den gleichen Effekt auf die Führung des Strahlgangs erzielen, jedoch mit umgekehrtem Vorzeichen, so dass eine gegenseitige Kompensation von Verkippungsfehlern zu mind. 50%, insbesondere mehr als 75% möglich wird. Somit wird das Problem einer De- oder Fehljustierung durch die Verwendung von speziellen optisch wirksamen Resonatorelementen gelöst. Die Auswahl der zu einem solchen Resonatorelement zusammenzufassenden Komponenten sowie auch die Berechnung der Auswirkungen im Resonatorlayout können dabei anhand bekannter Verfahren erfolgen. Die Elemente der Laserkavität werden dabei unter Berücksichtigung von konkreten Vorgehensweisen für die Auslegung von Resonatoren so gewählt und angeordnet, dass die Kippempfindlichkeit der Elemente um ein Vielfaches reduziert wird, und sich daher trotz Verwendung nicht-optimierter opto-mechanischer Halterungen ein langfristig stabiler Laser ergibt.

Ein solches bekanntes Verfahren stellt der ABCDEF-Formalismus als Berechnungsmethode für die Kippempfindlichkeit dar, wie er beispielsweise im Siegman Anthony E.: "Lasers", University Science Books, 1986, Seiten 607-614, dargestellt wird. Dort wird eine Erweiterung der ABCD-Matrizenrechnungsmethode zur Berechnung von Laserkavitäten auf die sog. ABCDEF - Berechnungsmethode beschrieben, durch welche die Kippempfindlichkeit von Resonatoren mittels des Matrix-Elementes "F" berechnet werden kann. Innerhalb eines Resonators wird ein - fiktives - Faltspiegelelement eingebaut, welches eine 3x3-Matrix mit folgenden Werten hat:
ABCDEF(100µrad)={A,B,E;C,D,F;0,0,1}={1,0,0;0,1,2·10⁻⁴;0,0,1}.
   Hierbei ist F ein konkreter Winkelverkippungswert von F=2·10⁻⁴ zugewiesen, was einer Verkippung der optischen Achse um 200 µrad entspricht. Dies entspricht in der Realität dem Einbau eines (fiktiven) planen Faltspiegels an der entsprechenden Stelle im Resonator, wo die Matrix ABCDEF(100µrad) eingefügt wurde, wobei dieses Faltspiegelelement in der Realität um einen Fehlwinkel von 100 µrad aus der optimalen Lage heraus "dejustiert" wurde. Bei Reflektion ergibt sich ein Ablenkwinkel, der zweimal so hoch ist als der Fehlwinkel. Daher ist F=2·10⁻⁴ zweimal so hoch als der Fehlwinkel von 100 µrad =10⁻⁴.

Die Resonatorachsenberechnung basierend auf der ABCDEF-Methode mit einem an der Stelle z im Resonator eingefügtem Fehljustage-Element ABCDEF(100µrad) ergibt hierbei Anfangskoordinaten für die optische Achse, welche in einem Resonatorumlauf wieder "in sich selbst" abgebildet wird (Eigenvektorbestimmung). Diese wird mit den zwei Achsenstrahlanfangswerten (r,r') dargestellt, wobei (r,r")=(0,0) ist, wenn es keine Resonatormisalignment gibt, d.h. also alle Elemente E und F jeweils Null sind. Der Effekt der Misalignment bzw. eines Fehlwinkels eines Elementes oder eines Faltelementes an einer gegebenen Stelle z im Resonator auf die Leistung des Lasers lässt sich aus dieser "Eigenachse" (r,r') berechnen, indem diese vom Anfang des Resonators bis zum Lasermedium - wiederum mittels der ABCDEF-Methode - als Strahl durchpropagiert wird. Ist der Achsenstrahl an der Stelle des Lasermediums gegeben durch (r_med,r_med'), so bestimmt insbesondere der Wert r_med die Verschiebung der optischen Achse am Lasermedium aus dem optimalen Zustand heraus, wobei dieser optimale Zustand mit r_med=0 gegeben wäre. Die relative Verschiebung der optischen Achse aus dem Optimum heraus im Verhältnis zum dort vorherrschenden Modenradius w_med ergibt dann ein quantitatives Mass für die Justageempfindlichkeit des Laserresonators für die konkrete Misalignment. Diese wird in % angegeben. Werte von 20% (d.h. r_med/w_med=0,2=20%) bei Anwendung eines Fehljustageelementes ABCDEF(100µrad) oder gar 50% und darüber ergeben in der Regel eine spürbare Kippempfindlichkeit, Werte deutlich darüber eine unerwünschte hohe Kippempfindlichkeit.

Die Strahllageparameter des Outputstrahls des Lasers sind von Interesse, da ein Laser üblicherweise in ein optisches Anwendungssystem integriert ist, das Toleranzen für den ankommenden Laserstrahl in seiner Lage, d.h. Position und Winkel an einer definierten Stelle, aufweist. Neben der Auswirkung der Verkippung eines Elementes auf die Leistung des Lasers ist somit auch von Interesse, inwieweit sich diese Strahllageparameter relativ zur optische Achsen am Auskoppelspiegel des Lasers ändern. Dies lässt sich mit derselben Methode nämlich mittels Propagation des Achsenstrahlanfangswerte (r, r') durch den Laser mittels ABCDEF-Matrizenrechnung bis hin zum Auskoppelspiegel berechnen, sofern der Auskoppelspiegel nicht ohnehin gleich dem Anfang des Resonators entspricht.

Die erfindungsgemässe Kopplung von wenigstens zwei entgegengesetzt kippempfindlichen Komponenten bzw. deren optisch wirksamen Flächen zu einem - unempfindlichen - gemeinsamen Resonatorelement kann ebenfalls anhand des dargestellten Formalismus betrachtet werden. In diesem Fall gibt es zwei Komponenten, die vermittels ihrer optischen Flächen bei Verkippung um einen Fehlwinkel den identischen oder zumindest im wesentlichen gleichen Effekt erzielen, jedoch mit umgekehrtem Vorzeichen.

Es ist zu beachten, dass die bisherige Berechnung nur die Verkippung um die eigene Achse beschreibt. Die vorliegenden Anordnungsvorschläge sind somit ganz besonders geeignet, die problematische Aufhängung jeder Komponente "für sich" bzw. im Verbund mit einem anderen als Resonatorelement zu kompensieren. Wenn sich jedoch die Basiskomponente bzw. Basisplatte verändert, z.B. aufgrund vorherrschender Druckverhältnisse oder Temperaturgradienten verbiegt, so entsteht an der Stelle der einzelnen Resonatorelemente bzw. der einzelnen Komponenten nicht nur eine reine Verkippung, sondern diese Veränderung geht einher mit einer transversalen Verschiebung des jeweiligen Elementes. Dies ist bei flachen Spiegeln nicht relevant, jedoch bei gekrümmten Spiegeln, wo ein Beitrag der lateralen Verschiebung im Endeffekt wieder als - zusätzlicher - Beitrag zur Verkippung darstellbar ist, der vom Krümmungsradius abhängt.

Eine solche kann als Funktion des Luftdruckes erfolgen, wenn beispielsweise die Laseranordnung eine Gasfüllung oder ein Vakuum enthält, aber auch aufgrund von Temperaturgradienten infolge eingebrachter oder fliessender Wärme und der Alterung des Materials der Basiskomponente sowie auch der Oberfläche und ihrer Spannung. Die als Ergebnis auftretende Verkippung und Verschiebung der einzelnen Komponenten als Ergebnis kann als Input für eine ABCDEF-Berechnung dienen, wobei neben dem F-Element auch das E-Matrixelement konkret genutzt werden kann.

Um eine entsprechende Robustheit und Stabilität zu gewährleisten werden die einzelnen Komponenten einer Sensitivitätsanalyse unterworfen, so dass mögliche Gruppierungen von zwei oder drei Komponenten identifiziert und untersucht werden können, die eine entgegengesetzte Reaktion auf die Verbiegung zeigen. Dabei kann insbesondere eine gezielte Positionierung und Verbindung von Faltspiegeln mit weiteren Komponenten des Resonators genutzt werden, um eine Gruppierung von Komponenten mit entgegengesetzter Empfindlichkeit und deren Verbindung zu einem gemeinsamen Resonatorelement zu ermöglichen.

Das Konzept der Gruppierung zweier Komponenten mit entgegengesetzter Empfindlichkeit kann analog auf die Gruppierung von mehr als zwei Komponenten mit in Summe sich gegenseitig kompensierender Kippempfindlichkeit erweitert werden.

Die hierbei zusammenzufassenden Komponenten bzw. deren optischen Flächen können dabei sowohl identisch als auch verschieden sein, wobei unter einer optischen Fläche eine mit der über den Resonatorstrahlgang geführten Strahlung wechselwirkende Fläche verstanden wird. So können die Flächen primär reflektierende Flächen, d.h. Flächen von Falt- oder Endspiegeln mit planen oder gekrümmten Spiegelflächen sein, als auch Durchtrittsflächen, z.B. des Lasermediums oder des Auskoppelspiegels, sein. Ebenso können beide Effekte kombiniert werden, z.B. in Auskoppelspiegeln oder an Flächen des Lasermediums, so dass sowohl eine Reflexion als auch eine Transmission erfolgen. Die Flächen eines Resonatorelementes können hierbei sowohl gleiche als auch unterschiedliche Krümmungsradien aufweisen und mit parallelen oder zueinander gewinkelten optischen Achsen orientiert sein.

Die Basis zur Identifikation geeigneter gruppierbarer bzw. zusammenfassbarer Komponenten und die Bestimmung der Anordnungsparameter der optischen Flächen zueinander im Resonatorelementes, wie auch dessen Plazierung und Orientierung im Strahlgang des Laserresonators, erfolgen dabei unter Verwendung des dargestellten ABCDEF-Formalismus.

Die erfindungsgemässe Laseranordnung bzw. das erfindungsgemässe Resonatorelement werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung einer Laseranordnung des Stands der Technik;
- Fig.2: die schematische Darstellung von Spiegelelementen in einer Laseranordnung des Stands der Technik;
- Fig.3: die schematische Darstellung der Verwendung eines ersten Ausführungsbeispiels eines erfindungsgemässen Resonatorelements in einer erfindungsgemässen Laseranordnung;
- Fig.4: die schematische Darstellung des ersten Ausführungsbeispiels des erfindungsgemässen Resonatorelements;
- Fig.5: die schematische Darstellung eines zweiten Ausführungsbeispiels des erfindungsgemässen Resonatorelements;
- Fig.6: die schematische Darstellung eines dritten Ausführungsbeispiels des erfindungsgemässen Resonatorelements;
- Fig.7: die schematische Darstellung eines vierten Ausführungsbeispiels des erfindungsgemässen Resonatorelements;
- Fig.8: die Erläuterung der Kippempfindlichkeit eines Faltspiegels für ein erstes Beispiel eines Laserresonators;
- Fig.9: die Erläuterung der Kippempfindlichkeit eines Faltspiegels für ein zweites Beispiel eines Laserresonators und
- Fig.10a-b: die schematische Darstellung einer erfindungsgemässen Laseranordnung bei der die wenigstens zwei optischen Flächen durch zwei unterschiedliche Reflexionspunkte einer gemeinsamen gekrümmten Fläche ausgebildet sind.

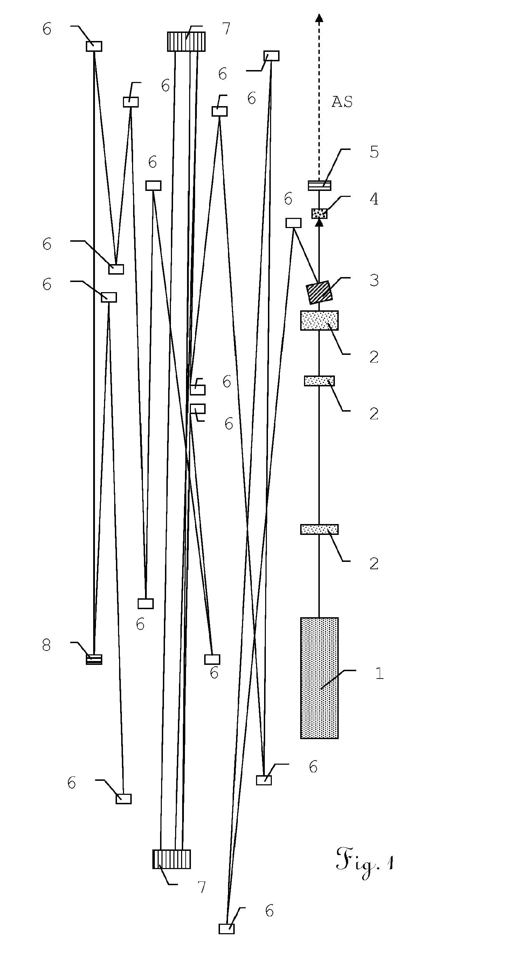

Fig.1 zeigt die schematische Darstellung einer Laseranordnung in Form eines Ultrakurzpulslasersystems zur Erzeugung von Femto- oder Pikosekundenpulsen als ein Beispiel für eine Laseranordnung des Stands der Technik. Die Laseranordnung weist hierbei mindestens eine Pumpquelle 1, insbesondere eine Laserdiodenquelle, zum Pumpen eines verstärkenden Lasermediums 4 zur Erzeugung einer Laseremission auf, wobei der Pumpstrahlengang über eine Folge von Linsen 2 als Einkoppeloptik und einen dichroitischen Pumpspiegel 3 geführt wird. Die Auskopplung der nutzbaren Laseremission AS erfolgt über ein dem Lasermedium 4 nachgeschalteten Auskoppelspiegel 5. In diesem Beispiel wird Yb:KYW als Lasermedium 4 verwendet, das innerhalb des Laserresonators mit mehreren gekrümmten oder planaren Resonatorspiegeln 6, d.h. Falt- oder Endspiegeln, plaziert ist. Der Laserresonator weist zudem zwei Herriotspiegel 7 und einen sättigbaren Absorberspiegel 8 als Komponente zur Erzeugung einer Modenkopplung auf. Diese im Laserresonator befindlichen Komponenten mit ihren optischen Flächen können erfindungsgemäss gruppiert und zu Resonatorelementen zusammengefasst werden, bei denen die erfindungsgemässe Kompensationswirkung gewährleistet ist.

Das beispielhaft dargestellte Ultrakurzpulslasersystem ist konkret als Femtosekundenlaser mit Yb:KYW oder Yb:KGW als Lasermedium 4, mit einer 30W-Laserdiode bei 980 nm als Pumpquelle 1, einem 7,5 m langem Resonator, d.h. einer Pulswiederholrate von 20 MHz, einer Auskopplung von 6,5 % und einer Pulslänge von 250 bis 300 fs bei einer zentralen Wellenlänge von 1040 - 1045 nm ausgebildet. Zum Starten und Stabilisieren der Modenkopplung dient der sättigbare Absorberspiegel 8. Der Laser wird im Soliton-Modenkopplungsbereich betrieben und enthält vier GTI-Laserfaltspiegel 6 mit einer negativen Gruppengeschwindigkeitsdispersion von 500 fs². Es wird, z.B. im Gegensatz zum Chirped-pulse-Pulsbetrieb, keine externe Pulskompression benötigt. Diese und weitere Laseranordnungen können aber auch beispielsweise als wiederherstellbare Verstärker, d.h. als Laserverstärkungsanordnungen, ausgebildet sein.

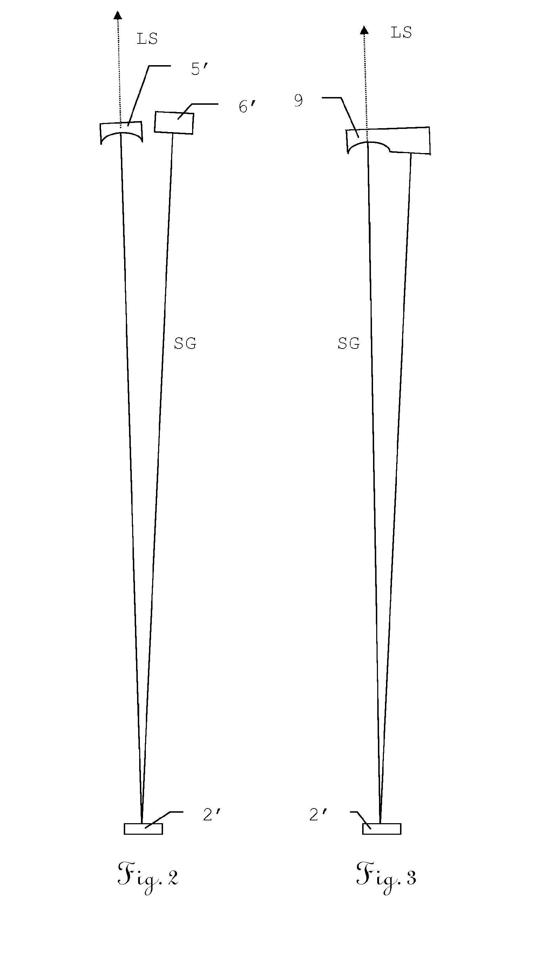

Fig.2 zeigt die schematische Darstellung von Spiegelelementen in einer solchen oder ähnlichen Laseranordnung des Stands der Technik, wobei hier rein exemplarisch und aus Veranschaulichungsgründen lediglich ein Lasermedium 2', z.B. als Scheibenlaser, d.h. in Thin-Disk-Geometrie, ein Endspiegel 6' und ein Auskoppelspiegel 5' dargestellt und betrachtet werden. Durch diese im Laserresonator befindlichen Komponenten wird der Strahlgang SG definiert, aus dem über den Auskoppelspiegel 5' die zu nutzende Laserstrahlung LS ausgekoppelt wird. Hierbei weisen Lasermedium 2' und Endspiegel 6' planare optische Flächen auf, wohingegen der Auskoppelspiegel 5' eine gekrümmte Fläche trägt. Diese optischen Flächen interagieren mit der Laserstrahlung im Laserresonator und definieren oder beeinflussen durch ihre reflektierende, fokussierende oder auch brechende Wechselwirkung den Strahlgang SG im Laserresonator, wobei dieser innerhalb des Laserresonators zumindest teilweise in Freistrahloptik ausgebildet ist. Je nach Länge des Gehäuses, in welches dieser Resonator integriert werden soll, können zudem eine Mehrzahl von hier aus Vereinfachungsgründen nicht dargestellten Faltspiegeln verwendet werden.

Im gezeigten Beispiel kann der Auskoppelspiegel 5' einen Krümmungsradius von 500mm aufweisen, wobei die Abstände zwischen Lasermedium 2' und Auskoppelspiegel 5' sowie zwischen Lasermedium 2' und Endspiegel 6' jeweils 1000mm betragen. Im Lasermedium 2' befindet sich eine thermische Linse mit einer Fokuslänge von 800mm. In dieser Beispielanordnung resultiert bei Verkippung des Auskoppelspiegel 5' z.B. eine Verschiebung der optischen Achse im Lasermedium 2' im Ausmaß von 13,37% des Modenradius im Lasermedium 2'. Bei einem rechnerischen Modenradius von 1,0 mm im Lasermedium 2' entspricht die Verschiebung des Modes 134 µm infolge der Verkippung des Auskoppelspiegels 5' um 100 µrad aus der Lage des Optimums heraus. Um den Leistungsverlust aufgrund des nichtoptimalen Durchgangs der Lasermode durch den Spot des Lasermediums 2' zu vermeiden, wird nun nach einem Element gesucht, das betragsmäßig die gleiche Kippempfindlichkeit aufweist, nur jedoch mit umgekehrtem Vorzeichen. Dies wird in der Komponente des Endspiegels 6' gefunden, der eine rechnerische Empfindlichkeit von -13,4% hat. Die Integration dieser konkreten Laserkavität erfolgt nun durch Ort und Wahl von hier nicht dargestellten Faltungselementen bzw. Faltspiegeln in einer Weise, dass die beiden Komponenten Auskoppelspiegel 5' und Endspiegel 6' nebeneinander stehen und somit zu einem monolithischen Element bzw. zu einem beide optischen Flächen tragenden Resonatorelement zusammengefasst werden können, das nur einmal auf der Basiskomponente oder Basisplatte montiert wird. Durch die Montage bzw. Integration beider Spiegelelemente auf einer Montageplatte gleichen Materials wie das Spiegelsubstrat oder aber die direkte monolithische Ausbildung der Flächen auf einem homogenen Substrat lässt sich der Übergang zwischen verschiedenen Materialien vermeiden, wodurch keine differentielle Ausdehnung bei Temperaturveränderung auftritt. Dadurch wird eines der Hauptprobleme des Stands der Technik vermieden, nämlich dass verschiedene Materialien mit unterschiedlichem thermischem Ausdehnungskoeffizienten aufeinandertreffen und sich gegeneinander, unter Umständen irreversibel, verschieben können.

Eine solche Integration und Ausbildung auf einem homogenen Substrat als erfindungsgemässes Resonatorelement 9 und dessen Verwendung in einer erfindungsgemässen Laseranordnung zeigt Fig.3 in schematischer Darstellung. Durch die Zusammenfassung der beiden ursprünglichen Komponenten Auskoppelspiegel 5' und Endspiegel 6', d.h. deren optischer Flächen als mit der über den Strahlgang geführten Strahlung wechselwirkende Flächen, in einem monolithischen Resonatorelement 9 entfällt die Kippempfindlichkeit. Dies bedeutet, dass bei einer reinen Verkippung des Resonatorelementes 9 aus der optimalen Lage heraus keine Verschiebung des Lasermodes am Ort des Lasermediums 2' resultiert. Der Lasermode steht immer noch senkrecht auf beiden Oberflächen des verkippten Resonatorelementes 9 und somit hat sich die Lage des Auskoppelstrahls geändert, wie sich zahlenmässig mit oben dargestellten ABCDEF-Methode berechnen lässt. Es können jedoch auch weitere Komponenten des Laserresonators erfindungsgemäß zu einem Resonatorelement 9 zusammengefasst werden, z.B. können dessen zwei Spiegelflächen auch einen Endspiegel und einen Faltspiegel definieren bzw. ersetzen oder es werden eine Spiegelfläche und das Lasermedium 2' zusammengefaßt, so dass eine Seite des Lasermediums 2' eine optische Transmissions- und Reflexionsfläche definiert.

Durch ein solches im Strahlgang SG angeordnetes Resonatorelement 9 mit zwei Spiegelflächen oder einer Spiegelfläche und einer optischen Transmissionsfläche als zwei optische Flächen können die oben gezeigten Laserresonatoren mit einem Strahlgang mit einer Länge von wenigstens 20 cm, insbesondere einer Länge von mehr als 50 cm, und damit die entsprechenden Laseranordnungen des Stands der Technik erfindungsgemäss modifiziert werden, wobei ein besondere Eignung für Pulswiederholfrequenzen im MHz-Bereich, insbesondere für eine Pulswiederholfrequenz im Bereich von 1-120 MHz, besteht. Die optischen Flächen sind dabei so miteinander starr verbunden und gemeinsam im Strahlgang justierbar, dass sie bei Verkippung um einen Fehlwinkel im wesentlichen den gleichen Effekt auf die Führung des Strahlgangs erzielen, jedoch mit umgekehrtem Vorzeichen, so dass eine gegenseitige Kompensation von Verkippungsfehlern zu mind. 50%, insbesondere mehr als 75% oder auch 90% oder mehr, bezogen auf einen verschiebungssensitiven Referenzpunkt, erfolgt. Ein solcher Referenzpunkt kann bspw. eine Eintrittsfläche des Lasermediums, der Auskoppelspiegel, eine Übertragungsoptik oder eine andere Apertur im Resonator sein. Das Resonatorelement 9 kann auf einer wenigstens ein weiteres optisches Element aufweisenden Basiskomponente oder Basisplatte montiert werden.

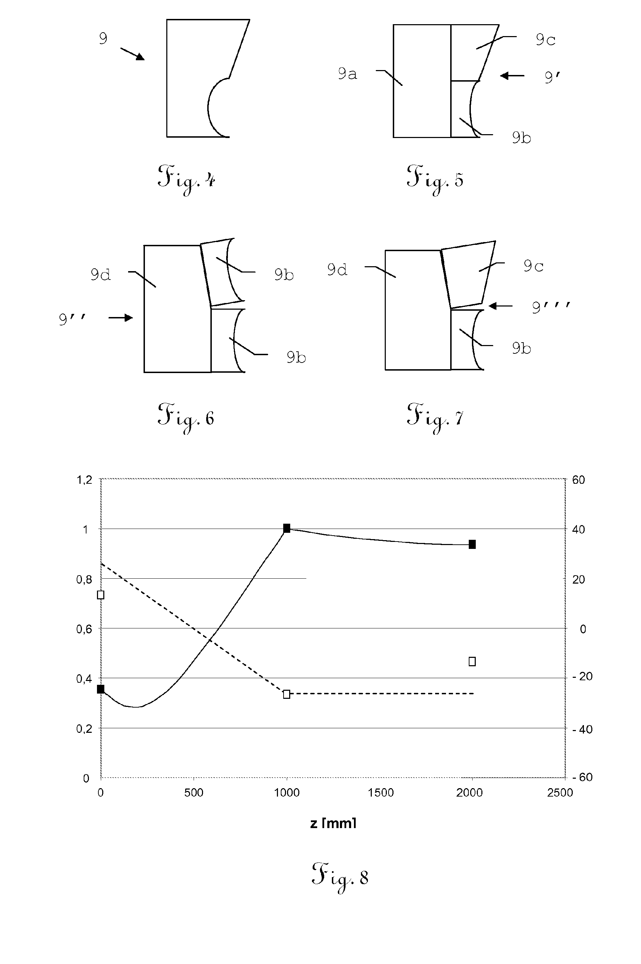

Fig.4 zeigt die schematische Darstellung des ersten Ausführungsbeispiels des erfindungsgemässen Resonatorelements 9 mit einem monolithischen, homogenen Substratmaterial, auf dem eine erste und eine zweite Spiegelfläche als optische Flächen ausgeformt sind. Aufgrund der einstückigen Ausbildung auf dem gemeinsamen Trägersubstrat sind beide Flächen miteinander starr verbunden und durch eine, nicht dargestellte, dieses Resonatorelement 9 tragende verstellbare Montagekomponente gemeinsam in einem Strahlgang justierbar. Als geeignete Materialien können bspw. Glas oder (Glas-) Keramik, aber auch Metall Verwendung finden, wobei die Spiegelflächen durch eine reine Formgebung, aber auch durch Aufbringen von reflektierenden Beschichtungen verwirklicht werden können.

Das erfindungsgemässe Resonatorelement 9 kann neben der Ausbildung aus einem homogenen Substratmaterial auch aus einzelnen Teilelementen zusammengefügt werden, d.h. aus verschiedenen Teilen gleichen oder im Ausdehnungsverhalten hinreichend ähnlichen Materials so zusammengesetzt werden, dass keine oder wenige Übergänge zwischen verschiedenen Materialien vorliegen, oder mit Materialien und in einer Weise, dass nur eine geringfügige differentielle Ausdehnung stattfindet, so dass die entstehende Spannung aufgrund einer Temperatur- oder Druckveränderung oder aufgrund von anderen, z.B. Alterungseffekten, zu keiner Verschiebung zwischen den Teilen oder zu keinem Bruch führt. Einige solche Beispiele werden in den Fig. 5-6 gezeigt.

Fig.5 zeigt die schematische Darstellung eines zweiten Ausführungsbeispiels des erfindungsgemässen Resonatorelements 9' mit einer zum ersten Ausführungsbeispiel ähnlichen Anordnung von optischen Flächen. Die zwei optischen Flächen sind jedoch in diesem Fall jeweils auf getrennten Teilelementen 9b und 9c ausgebildet, die auf einem gemeinsamen Trägerelement 9a angeordnet sind. Konkret wird ein Teilelement 9b mit einem Krümmungsradius versehen, wohingegen das andere Teilelement 9c einen planen Spiegel trägt. Die Teilelemente 9b und 9c und das Trägerelement 9a werden vorzugsweise aus einem Material oder homogenen Substratmaterial mit im wesentlichen gleichen Wärmeausdehnungsverhalten ausgebildet, z.B. aus Glas oder Keramik. Teilelemente 9b und 9c und Trägerelement 9a werden dann nach einer definierten Ausrichtung zueinander miteinander fest verbunden, insbesondere mittels optischer Kontaktierung, Diffusionsbonding, chemisch aktiviertem Bonding, Kitten, Kleben oder Löten. Glassubstrate können mit sehr genauen Winkeln vorgefertigt werden, sodass eine präzise Vorfertigung nach berechneten Winkelvorgaben gewährleistbar ist.

Ein drittes Ausführungsbeispiel des erfindungsgemässen Resonatorelements 9" wird in Fig.6 dargestellt, wobei hier die zwei Spiegelflächen einen gleichen Krümmungsradius aufweisen und als identische Teilelemente 9b ausgebildet sind. Die beiden Teilelemente 9b werden auf dem Trägerelement 9d so angeordnet, dass die optischen Achsen der zwei Spiegelflächen zueinander gewinkelt orientiert sind. Hierfür ist das Trägerelement 9d so ausgebildet, dass die Aufnahmeflächen für die jeweilige Basis der beiden Teilelemente 9b zueinander gewinkelt sind. Dieser Winkel kann vorab gemäss ABCDEF-Formalismus bestimmt und durch Schleifen eines die Trägerelement 9d verkörpernden Glasblocks präzise eingestellt werden.

Fig.7 zeigt die schematische Darstellung eines vierten Ausführungsbeispiels des erfindungsgemässen Resonatorelements 9"', wobei in diesem Fall das Trägerelement 9d in zu Fig.6 identischer Weise mit gewinkelten Aufnahmeflächen ausgebildet ist, wohingegen die aufgebrachten Teilelemente 9b und 9c denen aus Fig.5 entsprechen. Damit werden eine gekrümmte Spiegelfläche und eine plane Spiegelfläche miteinander in abgewinkelter Anordnung kombiniert, wobei zudem das Teilelement 9c aufgrund ihrer Formgebung bereits einen Winkel der Flächennormalen zur Basis der Teilelement 9c aufweist. Aufgrund der hierdurch gegebenen Freiheitsgrade kann eine Vielzahl von spezifisch angepassten Resonatorelementen 9"' realisiert werden.

Fig.8 veranschaulicht die Kippempfindlichkeit eines Faltspiegels für ein erstes Beispiel eines Laserresonators nach dem in Fig.2 gezeigten Beispiel. Die linke vertikale Achse bezeichnet den Modenradius in mm und die rechte vertikale Achse die relative Kippempfindlichkeit (in %) bei Verkippung eines (fiktiven) Faltspiegels an der Stelle z (in mm) des Resonators. Der Resonator ist hierbei entfaltet dargestellt: z=0 entspricht dem Auskoppelspiegel 5', z=2000 mm dem Endspiegel 6'. An der Position z=1000mm befindet sich das Lasermedium 2' mit einem Krümmungsradius von 1600 mm bzw. einer gesamten thermischen Linse von f_thl = 800 mm. Die relative Kippempfindlichkeit ergibt sich aus der Achsenverschiebung der optischen Achse des Eigenmodes des Laserresonators am Ort des Lasermediums 2' im Verhältnis zum Lasermode an derselben Stelle bei Verkippung des (fiktiven) Faltspiegels um 100 µrad. Die Endelemente des Resonators haben eine 2-fach geringere Kippempfindlichkeit, da diese pro Umlauf nur einmal reflektieren, im Gegensatz zu Faltelementen. Der Modenradius ist hierbei als durchgezogene Linie und die Resonatorkippempfindlichkeit als gestrichelte Linie eingetragen. Die Position der Komponenten ist durch die ausgefüllten Kästchen markiert, wohingegen deren Kippempfindlichkeit durch die nicht ausgefüllten Kästchen angezeigt wird.

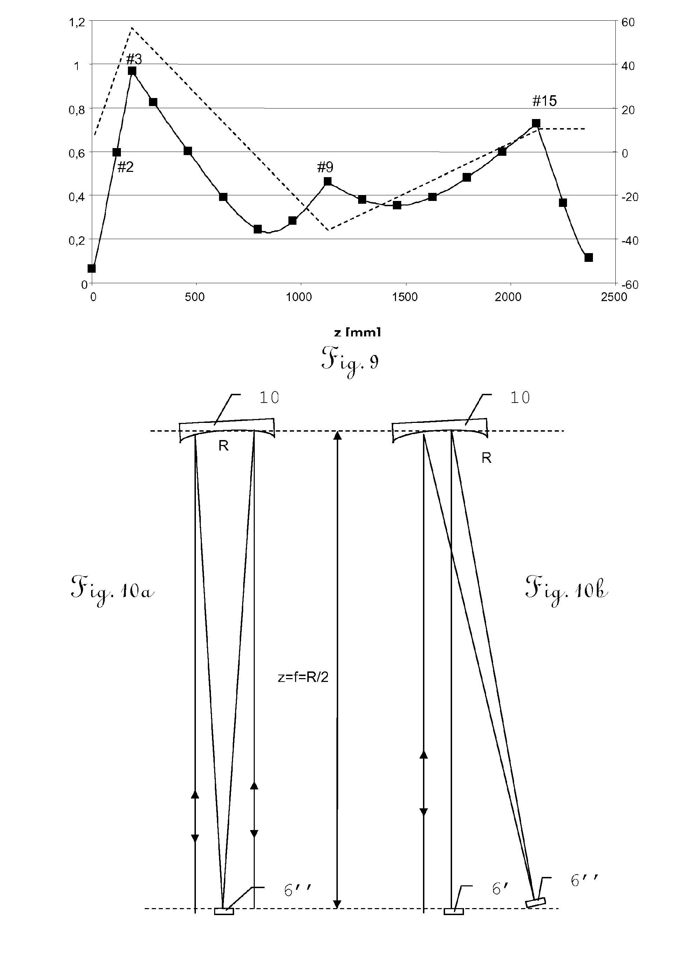

Fig.9 zeigt den Modenverlauf sowie die Kippempfindlichkeit für das Beispiel eines zweiten Resonators bei analoger Darstellungsweise zu Fig.8, d.h. die linke vertikale Achse bezeichnet wiederum den Modenradius in mm und die rechte vertikale Achse die relative Kippempfindlichkeit (in %) bei Verkippung eines Resonatorelementes an der Stelle z (in mm) des Resonators. Der Resonator ist hierbei entfaltet dargestellt. Dieser Resonator weist jeweils zwei plane Endspiegel als erstes und letztes Element auf, zwischen denen als insgesamt drittes Element #3 ein Spiegel mit dem Krümmungsradius von 300 mm, ein Spiegel mit dem Krümmungsradius von 500 mm als insgesamt neuntes Element #9 und ein Spiegel mit dem Krümmungsradius von 400 mm als insgesamt fünfzehntes Element #15 sowie zahlreiche plane Faltspiegel angeordnet sind. Das verwendete Lasermedium weist eine Dicke von 2 mm auf und ist direkt beim ersten Element angebracht. In dieser Anordnung zeigt der als zweites Element #2 angeordnete plane Faltspiegel eine relative Kippempfindlichkeit von +36,6% und der gekrümmte Faltspiegel als neuntes Element #9 eine relative Kippempfindlichkeit von -36,6%, wie dem Graph zu entnehmen ist. Eine Anordnung derart, dass diese beiden Spiegel nebeneinander stehen und gegenseitig stabil montiert werden, resultiert in einer nahezu perfekten Kompensation der Kippempfindlichkeit, sodass das resultierende Element nahezu keine Kippempfindlichkeit mehr zeigt.

Fig.10a-b zeigen die schematische Darstellung eines Teils einer erfindungsgemässen Laseranordnung bei der die wenigstens zwei optischen Flächen durch zwei unterschiedliche Reflexionspunkte einer gemeinsamen gekrümmten Fläche ausgebildet und so angeordnet sind, dass sie mit der über den Strahlgang geführten Strahlung pro Resonatorumlauf jeweils wenigstens zweimal wechselwirken. In den meisten Fällen werden beide optischen Flächen als getrennte Flächen, d.h. als Flächen mit unterscheidbaren optischen Eigenschaften, wie z.B. Reflexionsvermögen, Krümmungsradius oder Orientierung der Flächennormalen, insbesondere aber mit diskontinuierlichem Verlauf der Oberflächenform ausgebildet sein. Als eine weitere Möglichkeit kann jedoch auch eine durchgehende gekrümmte Fläche erfindungsgemäß Verwendung finden, indem zwei unterschiedliche Reflexionspunkte bzw. Reflexionsbereiche der Fläche verwendet werden. In diesem Fall wird die sonst durch die getrennten Flächen bewirkte Funktionalität nur durch die örtliche Trennung der Wechselwirkung bei doppelter Zahl von Wechselwirkungen mit dem gleichen Element erreicht. Das gleiche Element mit nicht getrennter Fläche wird somit mehrfach genutzt, wobei die Orte der Wechselwirkung auf der durchgehenden Fläche auseinanderfallen. Somit erfährt eine einzige gekrümmte Fläche zwei Reflektionen für jeden einfachen Resonatordurchlauf, wobei die Kippempfindlichkeit analog zur bisherigen Beschreibung wiederum jeweils entgegengesetztes Vorzeichen hat und sich in Summe wenigstens zu einem grossen Teil, möglichst aber zu 100% kompensiert.

Fig.10a und Fig.10b unterscheiden sich nur in der räumlichen Lage der Komponenten und weisen eine grundsätzlich gleiche Abfolge auf. In beiden Fällen resultiert eine Abfolge von einer zu durchlaufenden Distanz f, einer Reflexion an einer gekrümmten Fläche eines Resonatorelements 10 mit dem Krümmungsradius R=f*2, einer weiteren zu durchlaufenden Distanz f, einem flache Faltspiegel 6", einer weiteren zu durchlaufenden Distanz f, einer nochmaligen Reflexion an einem anderen Ort der gekrümmten Fläche mit Krümmungsradius R=f*2, einer weiteren zu durchlaufenden Distanz f, und einer Reflexion an einem flachen Endspiegel 6' oder einem weiteren Element des Resonators. Diese Anordnung kann flexibel als Ende eines nahezu beliebigen Resonators eingebaut werden, wodurch die Cavity verlängert wird. Einer der beiden oder beide flachen Spiegel 6',6" der Fig.10b kann beispielsweise als Halbleiterabsorberspiegel (SESAM - Semiconductor Saturable Absorber Mirror) ausgeführt werden. Besonderer Vorteil eines derart gestalteten Resonators ist es, dass bei Verkippung der gekrümmten Fläche eine Parallelverschiebung des Strahles am Endspiegel stattfindet, jedoch die Laserbedingung stets erhalten bleibt und somit die Leistung des Lasers nicht beeinträchtigt wird. Die Anordnung muss dabei nicht notwendigerweise am Ende des Resonators angebracht sein. Durch eine solche Verlängerung des Resonators wird die Umlaufzeit für einen Puls im Resonator verlängert und somit die Pulsenergie für eine Leistung erhöht.

Die Beispiele werden nur in schematischer Darstellung und zur Erläuterung der erfindungsgemässen Laseranordnung gezeigt, so dass keine exakte und massstabgetreue Wiedergabe der Grössenverhältnisse, Abstände der Komponente oder Winkel erfolgt.

## Patentansprüche

1. Laseranordnung, insbesondere zur Erzeugung oder Verstärkung von Femto- oder Pikosekundenpulsen, mit mindestens
• einem Lasermedium (2,2') zur Erzeugung einer Laseremission,
• einem Laserresonator mit einem Strahlgang (SG) mit einer Länge von wenigstens 20 cm, insbesondere einer Länge von mehr als 50 cm, mit wenigstens einem Endspiegel (6'),
wobei der Strahlgang (SG) innerhalb des Laserresonators zumindest teilweise als Freistrahloptik ausgebildet ist, **gekennzeichnet durch**
ein im Strahlgang angeordnetes Resonatorelement (9,9',9",9"') mit wenigstens zwei, insbesondere getrennten optischen Flächen als mit der über den Strahlgang (SG) geführten Strahlung wechselwirkende Flächen,
wobei die wenigstens zwei optischen Flächen so miteinander starr verbunden und gemeinsam im Strahlgang (SG), insbesondere gemeinsam justierbar, angeordnet sind, dass sie bei Verkippung um einen Fehlwinkel im wesentlichen den gleichen Effekt auf die Führung des Strahlgangs (SG) erzielen, jedoch mit umgekehrtem Vorzeichen, so dass eine gegenseitige Kompensation von Verkippungsfehlern erfolgt, insbesondere zu mind. 50%, vorzugsweise zu mehr als 75% bezogen auf einen verschiebungssensitiven Referenzpunkt.

2. Laseranordnung nach Anspruch 1,
**dadurch gekennzeichnet, dass** die wenigstens zwei optischen Flächen jeweils auf getrennten Teilelementen (9b,9c) ausgebildet sind, die auf einem gemeinsamen Trägerelement (9a,9d) angeordnet sind, wobei die optischen Flächen identische oder unterschiedliche optische Eigenschaften aufweisen.

3. Laseranordnung nach Anspruch 2,
**dadurch gekennzeichnet, dass**
die Teilelemente (9b,9c) und das Trägerelement (9a,9d) aus einem Material mit im wesentlichen gleichen Wärmeausdehnungsverhalten ausgebildet sind, insbesondere aus einem Substratmaterial mit gleichem Wärmeausdehnungskoeffizienten oder aus dem gleichen Substratmaterial ausgebildet sind, insbesondere aus Glas oder Keramik.

4. Laseranordnung nach einem der Ansprüche 2 bis 3,
**dadurch gekennzeichnet, dass**
die Teilelemente (9b,9c) und das Trägerelement (9a,9d) miteinander fest verbunden sind, insbesondere mittels optischer Kontaktierung, Diffusionsbonding, chemisch aktiviertem Bonding, Kitten, Kleben oder Löten.

5. Laseranordnung nach Anspruch 1,
**dadurch gekennzeichnet, dass**
die zwei optischen Flächen einstückig auf einem gemeinsamen Trägersubstrat ausgebildet sind.

6. Laseranordnung nach einem der vorangehenden Ansprüche, **dadurch gekennzeichnet, dass**
das Resonatorelement (9,9',9",9"') auf einer wenigstens ein weiteres optisches Element aufweisenden Basiskomponente, insbesondere einer Basisplatte montiert ist.

7. Laseranordnung nach einem der vorangehenden Ansprüche,
**dadurch gekennzeichnet, dass**
die wenigstens zwei optischen Flächen durch zwei unterschiedliche Reflexionspunkte einer gemeinsamen, gekrümmten Fläche ausgebildet und so angeordnet sind, dass sie mit der über den Strahlgang (SG) geführten Strahlung pro Resonatorumlauf jeweils wenigstens zweimal wechselwirken.

8. Laseranordnung nach einem der vorangehenden Ansprüche,
**dadurch gekennzeichnet, dass**
die wenigstens zwei optischen Flächen den Endspiegel (6') und einen Faltspiegel definieren.

9. Laseranordnung nach einem der vorangehenden Ansprüche,
**dadurch gekennzeichnet, dass**
die wenigstens zwei optischen Flächen zwei Spiegelflächen mit gleichem oder unterschiedlichem Krümmungsradius darstellen.

10. Laseranordnung nach einem der vorangehenden Ansprüche, **dadurch gekennzeichnet, dass**
die optischen Achsen der zwei optischen Flächen zueinander gewinkelt orientiert sind.

11. Laseranordnung nach einem der vorangehenden Ansprüche, **dadurch gekennzeichnet, dass**
eine der wenigstens zwei optischen Flächen transmittierenden Charakter aufweist, insbesondere eine Seite des Lasermediums (2') oder eines Auskoppelspiegels (5') ist.

12. Laseranordnung nach einem der vorangehenden Ansprüche, **dadurch gekennzeichnet, dass**
die Laseranordnung zur Erzeugung einer Modenkopplung ausgebildet ist.

13. Laseranordnung nach einem der vorangehenden Ansprüche, **dadurch gekennzeichnet, dass**
die Laseranordnung als wiederherstellbarer Verstärker ausgebildet ist.

14. Laseranordnung nach einem der vorangehenden Ansprüche, **dadurch gekennzeichnet, dass**
die Laseranordnung für eine Pulswiederholfrequenz im MHz-Bereich ausgelegt ist, insbesondere für eine Pulswiederholfrequenz im Bereich von 1-120 MHz.

15. Resonatorelement (9,9',9",9"',10) zur Anordnung im Strahlgang (SG) eines Laserresonators in einer Laseranordnung nach einem der vorangehenden Ansprüche mit
- einer ersten optischen Fläche als mit der über den Strahlgang (SG) geführten Strahlung wechselwirkenden Fläche und
- einer verstellbaren Montagekomponente zur Verbindung mit einer wenigstens ein weiteres optisches Element aufweisenden Basiskomponente, **gekennzeichnet durch**
wenigstens eine zweite, insbesondere eine von der ersten Fläche getrennte, optische Fläche als mit der über den Strahlgang (SG) geführten Strahlung wechselwirkende Fläche, wobei die erste und zweite optische Fläche miteinander starr verbunden und **durch** das verstellbare Montageelement gemeinsam im Strahlgang (SG) so, insbesondere gemeinsam justierbar, anordenbar sind, dass sie bei Verkippung um einen Fehlwinkel im wesentlichen den gleichen Effekt auf die Führung des Strahlgangs (SG) erzielen, jedoch mit umgekehrtem Vorzeichen, so dass eine gegenseitige Kompensation von Verkippungsfehlern erfolgt, insbesondere zu mind. 50%, vorzugsweise zu mehr als 75% bezogen auf einen verschiebungssensitiven Referenzpunkt.
